# EUROPEAN PATENT APPLICATION

(11) **EP 2 161 647 A1**
(43) Date of publication of application: **10.03.2010**
(21) Application number: 09167715.3
(22) Date of filing: 12.08.2009
(51) Int. Cl.: G06F 1/26

(54) **Power-on protection method, module and system**

(30) Priority: 18.08.2008 CN 200810030227; 24.06.2009 WO PCT/CN2009/072424
(71) Applicant: Huawei Technologies Co., Ltd., Longgang District Shenzhen Guangdong 518129 (CN)
(72) Inventor: Yin, Hongming, Shenzhen Guangdong 518129 (CN); Yuan, Lelin, Shenzhen Guangdong 518129 (CN)
(74) Representative: Thun, Clemens

(57) **Abstract**

The embodiment of the present invention discloses a power-on protection method, a module and a system. The method includes obtaining installation information and installation configuration file information of a blade server in a blade frame, wherein the installation configuration file information is configuration strategy information about setting the blade server in the blade frame; and detecting whether the installation information is matched with the installation configuration file information and supplying power to the blade server if the installation information is matched with the installation configuration file information, otherwise, not supplying power to the blade server. The misplug and the mixed plugging of the blade server is easily detected according to the installation configuration file information through the power-on protection method, the module and the system provided by the embodiment, thus avoiding the problems such as service abnormity and device fault caused by the wrong plug.

## Description

### FIELD OF THE TECHNOLOGY

The embodiment of the present invention relates to the communication field, in particular to a power-on protection method, a module and a system.

### BACKGROUND

A blade server is a low-cost server platform with high availability high density (HAHD), and is specially designed for special application industries and high-density computer environment. In the blade server, each "blade" is a system motherboard in effect and is similar to an independent server. In such mode, each motherboard operates a system of its own to serve different specified user groups without interrelation with each other. However, system software can be used to integrate these motherboards into a server cluster. In a cluster mode, all the motherboards can be connected to provide a high-speed network environment, share resources, and serve the same user group.

In application solutions of traditional blade servers, engineering technicians install and configure the blade servers according to user manuals of products; however, as the blade servers with different specifications have similarity in the appearance and structure, misplug of the blade servers in slots of blade frames easily occurs. In addition, a field replace unit (FRU) of a blade server or a machine frame device in the blade frame is incompatible with the blade server, which may cause mixed plugging between the blade server and the incompatible FRU or the machine frame device.

As the misplug and the mixed plugging easily occur in the manually configured blade servers of the conventional technology, the wrong plug may result in problems such as service abnormity, and device fault, which are difficult to be found and troubleshot.

### SUMMARY

The embodiment of the present invention provides a power-on protection method, a module and a system which can compare installation information with installation configuration file information of a blade server in order to control whether to supply power to the blade server or not.

The embodiment of the present invention provides a power-on protection method which includes:
obtaining installation information and installation configuration file information of a blade server in a blade frame, wherein the installation configuration file information is configuration strategy information about setting the blade server in the blade frame; and
detecting whether the installation information is matched with the installation configuration file information and supplying power to the blade server if the installation information is matched with the installation configuration file information, otherwise, not supplying power to the blade server.

Accordingly, the embodiment of the present invention further provides a power-on protection module which includes:
an information acquisition unit, adapted to obtain installation information and installation configuration file information of a blade server in a blade frame, wherein the installation configuration file information is configuration strategy information about setting the blade server in the blade frame;
a detection unit, adapted to detect whether the installation information is matched with the installation configuration file information; and
a control unit, adapted to control to supply power to the blade server if the detection unit detects that the installation information is matched with the installation configuration file information, otherwise, to control not to supply power to the blade server.

Accordingly, the embodiment of the present invention further provides a power-on protection system which includes a blade server and a power-on protection module, in the system:

The power-on protection module is adapted to obtain installation information and installation configuration file information of the blade server in a blade frame, wherein the installation configuration file information is configuration strategy information about setting the blade server in the blade frame; detect whether the installation information is matched with the installation configuration file information; and control to supply power to the blade server if the installation information is matched with the installation configuration file information, otherwise, control not to supply power to the blade server.

In the embodiment of the present invention, after the installation information of the blade server in the blade frame and the installation configuration file information about setting the blade server in the blade frame are obtained, it is detected whether the installation information is matched with the installation configuration file information or no; the power is supplied to the blade server if the installation information is matched with the installation configuration file information; otherwise, no power is supplied to the blade server; thus, it is easy to detect whether misplug and mixed plugging of the blade server occur according to the installation configuration file information, thereby avoiding the problems such as service abnormity and device fault caused by the wrong plug.

### BRIEF DESCRIPTION OF THE DRAWINGS

FIG. 1 is a schematic diagram of a first embodiment of the power-on protection method of the present invention;

FIG. 2 is a schematic diagram of a second embodiment of the power-on protection method of the present invention;

FIG. 3 is a flowchart of a working method of the blade frame in the embodiment of the present invention;

FIG. 4 is a schematic diagram of a third embodiment of the power-on protection method of the present invention;

FIG. 5 is a schematic diagram of a first embodiment of the power-on protection system of the present invention;

FIG. 6 is a schematic diagram of a second embodiment of the power-on protection system of the present invention; and

FIG. 7 is a schematic diagram of a third embodiment of the power-on protection system of the present invention.

### DETAILED DESCRIPTION

The embodiments of the present invention provide a power-on protection method, a power-on protection module and a power-on protection system which can compare installation information with installation configuration file information of a blade server in order to control whether to supply power to the blade server or not, and easily detect whether misplug and mixed plugging of the blade server occur according to the installation configuration file information, thereby avoiding the problems such as service abnormity and device fault caused by the wrong plug.

The embodiments of the present invention are described in detail in the following paragraphs by reference to the accompanying drawings.

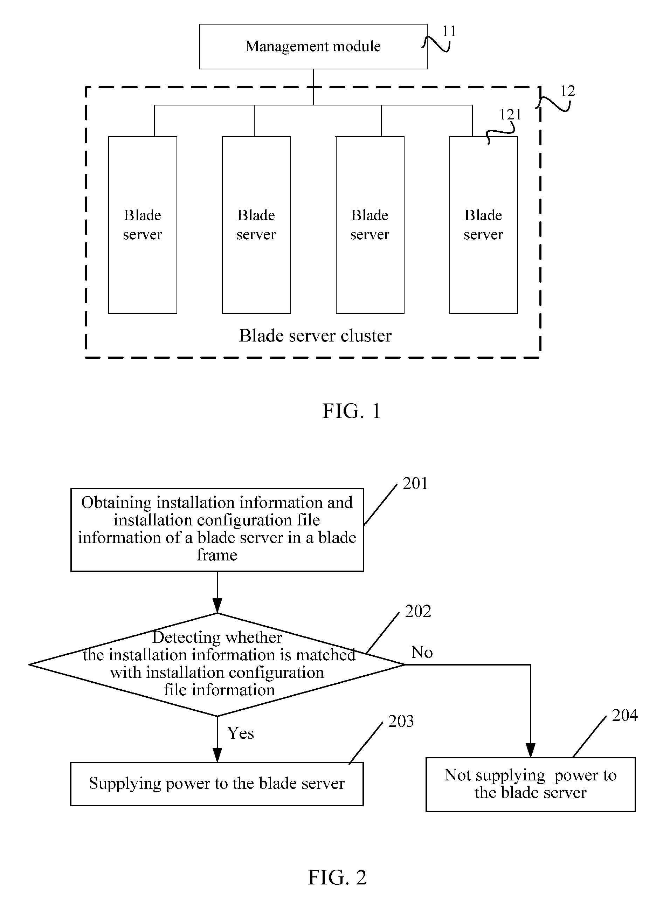

FIG. 1 is a schematic diagram of a first embodiment of the power-on protection method of the present invention, and shows a blade frame of the embodiment of the present invention. The blade frame may include two parts, that is, a management module 11 and a blade server cluster 12. The management module 11 is a management system of the blade frame which can implement the management of the power-on, power-off and reset of the blade server in the whole blade frame, and can also perform the management of alarm monitoring, remote keyboard video mouse (KVM), or the like. Multiple blade servers 121 and a baseboard management controller (BMC) constitute the blade server cluster 12 in the blade frame. Each blade server can contain an independent BMC. The BMC of the blade server can implement the management of power supply, alarm, monitoring or the like on the blade server after the blade server is inserted into a machine frame. The blade server is a server in the blade frame, which is adapted to process services and support the running of service software.

FIG. 2 is a schematic diagram of a second embodiment of the power-on protection method of the present invention. Referring to FIG. 2, the method mainly includes:

Step 201: Installation information and installation configuration file information of a blade server in a blade frame may be obtained.

Specifically, the installation configuration file information is configuration strategy information about setting the blade server in the blade frame, that is, the installation configuration file describes the information about how to set the blade server in the blade frame; and the installation configuration file may include, but is not limited to, one or more of the following configuration strategy information:

First configuration strategy information which instructs to set a specified blade server at a specified position in the blade frame, for example, a list of slots in the blade frame corresponding to blade server types;

Second configuration strategy information which instructs to set a matching relation between front plugboard electronic tag information and rear plugboard electronic tag information of the blade server in the blade frame;

Third configuration strategy information which instructs to set a blade server that has a version matching relation with an FRU of the blade server in the blade frame, in which the blade server can be provided with multiple FRUs and the blade server and each FRU have a certain version matching relation. The third configuration strategy information describes compatible matching information of the blade server and multiple FRUs, and the FRU may be one or more of the following: a Gigabit-Ethernet board, a hard disk board, a fiber channel (FC) board, a small computer system interface (SCSI) board, a serial attached SCSI board, and an optical module, etc.;

Fourth configuration strategy information which instructs to set a machine frame device that has the version matching relation with the blade frame in the blade frame, in which the blade frame may further include a machine frame device such as a power supply, a fan, a switching network board and the like. The blade frame and each machine frame device need to have a certain version matching relation, and the fourth configuration strategy information describes the compatible matching information of the blade frame and multiple machine frame devices.

In practical scene, the above-mentioned configuration strategy information can be combined randomly in the installation configuration file. Generally, the second configuration strategy information and the third configuration strategy information may be combined with the first configuration strategy information.

For example, an installation configuration file as shown in Table 1 below describes information of a blade server set in each slot in a blade frame and a matching relation between front plugboard electronic tag information and rear plugboard electronic tag information of the blade server. That is, the installation configuration file includes the first configuration strategy information and the second configuration strategy information.

**Table 1**

| Blade Frame | Slot | Front Plugboard | Rear Plugboard |
|---|---|---|---|
| MMSCV1.3-020-10-001 | 1 | MMSCV1.3-DB-1-0 | MMSCV1.3-DB-1-1 |
| | 2 | MMSCV1.3-DB-2-0 | MMSCV1.3-DB-2-1 |
| | 3 | MMSCV1.3-COM-3-0 | MMSCV1.3-COM-3-1 |
| | ... | ... | ... |
| | n | MMSCV1.3-MGR-N-0 | MMSCV1.3-MGR-N-1 |

The electronic tag information may include such information as a blade server name, a blade server type, a manufacturer, a serial number, or the like. For example, "MMSCV1.3-DB-1-0" is a numbering rule "service version-server type-slot-front/rear plugboard identification".

Also for example, an installation configuration file as shown in Table 2 below describes information of a blade server set in each slot in a blade frame, a matching relation between front plugboard electronic tag information and rear plugboard electronic tag information of the blade server, and a matching relation between the blade server and each FRU. That is, the installation configuration file includes the first configuration strategy information, the second configuration strategy information and the third configuration strategy information.

**Table 2**

| Blade Frame | Slot | Front Plugboard | Rear Plugboard | Board |
|---|---|---|---|---|
| MMSCV1.3-0 | 1 | MMSCV1.3-DB-1-0 | MMSCV1.3-DB-1-1 | Hard Disk Board |
| 20-10-001 | 2 | MMSCV1.3-DB-2-0 | MMSCV1.3-DB-2-1 | Fiber Board |
| | 3 | MMSCV1.3-COM-3-0 | MMSCV1.3-COM-3-1 | Serial Board |
| | ... | ... | ... | ... |
| | n | MMSCV1.3-MGR-N-0 | MMSCV1.3-MGR-N-1 | ...... |

Corresponding to the preceding configuration strategy information, the installation information of the blade server in the blade frame may include, but is not limited to, the following information:

With regard to the first configuration strategy information, the installation information may be the electronic tag information of the blade server inserted in a slot of the blade frame and the position information of the blade server in the blade frame; the electronic tag information indicates the blade server of a certain specified type, and the position information indicates the slot where the blade server is actually inserted;

With regard to the second configuration strategy information, the installation information may be the electronic tag information of the blade server inserted in a slot of the blade frame, and the electronic tag information includes the front plugboard electronic tag information and rear plugboard electronic tag information thereof;

With regard to the third configuration strategy information, the installation information may be the electronic tag information of the blade server inserted in a slot of the blade frame and the FRU information of the blade server; and

With regard to the fourth configuration strategy information, the installation information may be the electronic tag information of the blade server inserted in a slot of the blade frame and the information of a machine frame device in the blade frame.

Step 202: Whether the installation information is matched with the installation configuration file information may be detected, and executing step 203 if the installation information is matched with the installation configuration file information; otherwise, executing step 204.

Specifically, as the installation configuration file may include one or more configuration strategy information, detection can focus on one type of configuration strategy information or on multiple types of configuration strategy information.

If the installation information includes the electronic tag information of the blade server inserted in a slot of the blade frame and the position information of the blade server in the blade frame, and the installation configuration file information includes the first configuration strategy information, it is judged whether the blade server is set at a position indicated by the first configuration strategy information according to the electronic tag information, the position information and the first configuration strategy information; if the blade server is set at the position indicated by the first configuration strategy information, it is determined that the installation information is matched with the installation configuration file information; otherwise, it is determined that the installation information is not matched with the installation configuration file information;

If the installation information includes the electronic tag information of the blade server inserted in a slot of the blade frame, and the electronic tag information includes the front plugboard electronic tag information and the rear plugboard electronic tag information, and the installation configuration file information includes the second configuration strategy information, it is judged whether the front plugboard and the rear plugboard of the blade server have a matching relation indicated by the second configuration strategy information according to the front plugboard electronic tag information, the rear plugboard electronic tag information and the second configuration strategy information. If the front plugboard and the rear plugboard of the blade server have the matching relation, it is determined that the installation information is matched with the installation configuration file information; otherwise, it is determined that the installation information is not matched with the installation configuration file information.

If the installation information includes the electronic tag information of the blade server inserted in a slot of the blade frame and the FRU information of the blade server, and the installation configuration file information includes the third configuration strategy information, it is judged whether the blade server and the FRU of the blade server have a version matching relation indicated by the third configuration strategy information according to the electronic tag information, the FRU information of the blade server and the third configuration strategy information. If the blade server and the FRU of the blade server have the version matching relation, it is determined that the installation information is matched with the installation configuration file information; otherwise, it is determined that the installation information is not matched with the installation configuration file information.

If the installation information includes the electronic tag information of the blade server inserted in a slot of the blade frame and the information of the machine frame device in the blade frame, and the installation configuration file information includes the fourth configuration strategy information, it is judged whether the blade server and the machine frame device in the blade frame have a version matching relation indicated by the fourth configuration strategy information according to the electronic tag information, the information of the machine frame device in the blade frame and the fourth configuration strategy information. If the blade server and the machine frame device have the version matching relation, it is determined that the installation information is matched with the installation configuration file information; otherwise, the installation information is not matched with the installation configuration file information.

Step 203: When the installation information is matched with the installation configuration file information, the power is supplied with to the blade server.

Specifically, the step 203 may include that the power-on action may be performed on the blade server when the blade server inserted in a slot of the blade frame is not supplied with power. For example, a power-on instruction may be sent to a baseboard management controller (BMC), and the BMC supplies power to the blade server according to the power-on instruction and keeps supplying power to the blade server when the blade server inserted in a slot of the blade frame has been supplied with power.

Step 204: When the installation information is not matched with the installation configuration file information, the power may not be supplied to the blade server.

Specifically, the step 204 may include: power-on action on the blade server may not be performed when the blade server inserted in a slot of the blade frame is not supplied with power; and power-off or reset action on the blade server may be performed when the blade server inserted in a slot of the blade frame has been supplied with power, for example, sending a power-on inhibition instruction to the BMC, and the BMC performs power- off or reset on the blade server according to the instruction.

In the embodiment of the power-on protection method shown in FIG. 2, the step 202 detects whether the installation information is matched with the installation configuration file information by obtaining the installation information of the blade server in the blade frame and the installation configuration file information about setting the blade server in the blade frame in the step 201; the step 203 supplies power to the blade server if the installation information is matched with the installation configuration file information; otherwise, the step 204 does not supply power to the blade server; thus, it is easy to detect whether misplug and mixed plugging of the blade server occur according to the installation configuration file information, and the power supply status of a device can be handled in the case of the misplug and the mixed plugging, thereby avoiding the problems such as service abnormity and device fault caused by the wrong plug.

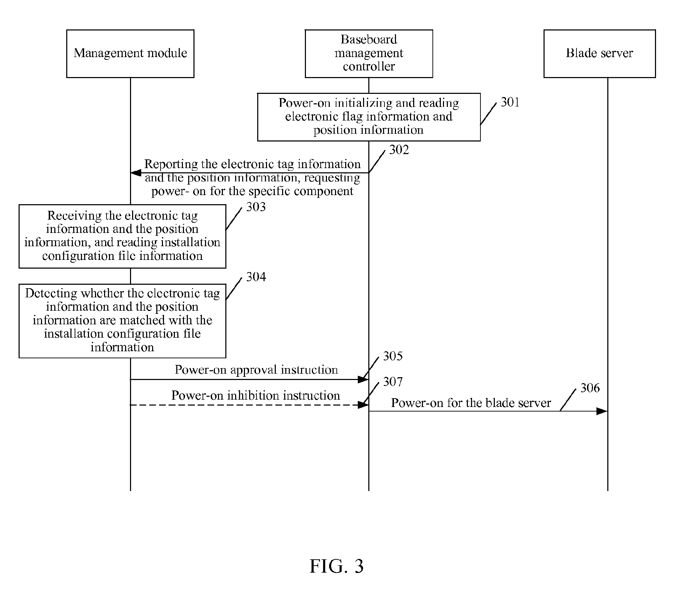

FIG. 3 is a flowchart of a working method of the blade frame of the embodiment of the present invention, and the method mainly includes:

Step 301: A BMC initializes power-on and reads electronic tag information of a specific component inserted in a slot of the blade frame and position information of the specific component in the blade frame. At the moment, the blade server is not supplied with power.

In one specific example, the read information is the electronic tag information of the specific component inserted in a slot of the blade frame and the position information of the blade server in the blade frame.

Step 302: The BMC reports the electronic tag information and the position information to a management module to request power-on for the specific component (for example, a blade server), in which the request information includes the electronic tag information and the position information.

Step 303: The management module receives the electronic tag information and the position information (for example, the installation information of the blade server in the blade frame), and reads an installation configuration file which is stored in the management module and about how to configure the specific component in the blade server.

In the preceding examples, the installation configuration file includes the first configuration strategy information which describes the setting of a specified blade server at a specified position of the blade frame. For example, the first configuration strategy information is a list of slots in the blade frame corresponding to blade server types.

Step 304: The management module detects whether the electronic tag information and the position information are matched with the installation configuration file information; if the electronic tag information and the position information are matched with the installation configuration file information, executing step 305; otherwise, executing step 307.

In the preceding specific examples, the management module judges whether the blade server is set at the position indicated by the first configuration strategy information according to the electronic tag information, the position information and the first configuration strategy information. If the blade server is judged to be set at the position indicated by the first configuration strategy information, it is determined that the electronic tag information and the position information are matched with the installation configuration file information, and the step 305 is executed; otherwise, it is determined that the electronic tag information and the position information are not matched with the installation configuration file information, and the step 307 is executed.

Step 305: The management module sends, a power-on instruction to a BMC.

Step 306: The BMC powers on the blade server according to the power-on instruction.

Step 307: The management module sends a power-on inhibition instruction to the BMC.

In another specific example of the step 301 to the step 307, the installation configuration file of the management module includes second configuration strategy information. The second configuration strategy information instructs to set a matching relation between front plugboard electronic tag information and rear plugboard electronic tag information of the blade server in the blade frame. Specifically, the example includes that the BMC reads the front plugboard electronic flag information and the rear plugboard electronic flag information of the blade server (i.e., the actual configuration information) when initializing power-on and reports the front plugboard electronic tag information and the rear plugboard electronic tag information to the management module; the management module judges whether the front plugboard and the rear plugboard of the blade server have a matching relation indicated by the second configuration strategy information according to the front plugboard electronic tag information, the rear plugboard electronic tag information and the second configuration strategy information; and, if the front plugboard and the rear plugboard of the blade server have the matching relation, it is determined that the installation information is matched with the installation configuration file information, and the management module sends a power-on approval instruction to the BMC; if the front plugboard and the rear plugboard of the blade server do not have the matching relation, it is determined that the installation information is not matched with the installation configuration file information, and the management module sends a power-on inhibition instruction to the BMC.

In another specific example of the step 301 to the step 307, the installation configuration file of the management module includes third configuration strategy information which instructs to set the blade server that has a version matching relation with the FRU of the blade server in the blade frame. Specifically, the example includes that the BMC reads the electronic tag information of the blade server and the FRU information of the blade server (i.e., the actual configuration information) and reports the electronic tag information of the blade server and the FRU information of the blade server to the management module; the management module judges whether the blade server and the FRU of the blade server have the version matching relation indicated by the third configuration strategy information according to the electronic tag information of the blade server, the FRU information of the blade server and the third configuration strategy information; and, if the blade server and the FRU of the blade server have the version matching relation, it is determined that the installation information is matched with the installation configuration file information, and the management module sends a power-on approval instruction to the BMC; if the blade server and the FRU of the blade server do not have the version matching relation, it is determined that the installation information is not matched with the installation configuration file information, and the management module sends a power-on inhibition instruction to the BMC.

In another specific example of the step 301 to the step 307, when the local installation configuration file of the management module includes fourth configuration strategy information which instructs to set the blade server that has a version matching relation with the machine frame device in the blade frame, then the BMC may read the electronic tag information of the blade server and the information of the machine frame device in the blade frame (i.e., the actual configuration information), and reports the electronic tag information of the blade server and the information of the machine frame device in the blade frame to the management module; the management module judges whether the blade server and the machine frame device in the blade frame have the version matching relation instructed by the fourth configuration strategy information according to the electronic tag information of the blade server, the information of the machine frame device in the blade frame and the fourth configuration strategy information; if the blade server and the machine frame device in the blade frame have the version matching relation, it is determined that the installation information is matched with the installation configuration file information, and the management module sends a power-on approval instruction to the BMC; otherwise, the installation information is not matched with the installation configuration file information, and the management module sends a power-on inhibition instruction to the BMC.

In the embodiment of the power-on protection method shown in FIG. 3, the management module obtains the installation information of the blade server in the blade frame reported by the BMC and the local installation configuration file information of the management module about setting the blade server in the blade frame through the step 303; the management detects whether the installation information is matched with the installation configuration file information through the step 304; if the installation information is matched with the installation configuration file information, the management module sends a power-on instruction to the BMC through the step 305, and the BMC powers on the blade server through the step 306; otherwise, the management module sends a power-on inhibition instruction on the blade server to the BMC through the step 307 so as not to power-on the blade server; thus, it is easy to detect whether the misplug of the blade server occurs according to the installation configuration file information, thereby avoiding the problems such as service abnormity and device fault caused by the wrong plug.

Another specific example of the step 301 to the step 307 at least includes the step 301 to the step 307 of the embodiment shown in FIG. 3. Unlike the embodiment shown in FIG. 3, the specific example has the following additional steps: in the embodiment, besides powering on the blade server according to the power-on approval instruction, the BMC also performs flash of an indicator light indicating normal power supply and performs state prompt on the power supply of the blade server.

In the embodiment, besides supplying no power to the blade server according to the power-on inhibition instruction, the BMC also performs indicator light alarm and performs state prompt on the blade server with no power-on. In the embodiment of the power-on protection method shown in FIG. 3, the management module obtains the installation information of the blade server in the blade frame reported by the BMC and the local installation configuration file information of the management module about setting the blade server in the blade frame through the step 303; the management module detects whether the installation information is matched with the installation configuration file information through the step 304; if the installation information is matched with the installation configuration file information, the management module sends a power-on approval instruction to the BMC through the step 305, and the BMC powers on the blade server through the step 306; otherwise, the management module sends a power-on inhibition instruction on the blade server to the BMC through the step 307 so as not to power-on the blade server; thus, it is easy to detect whether the misplug of the blade server occurs according to the installation configuration file information, thereby avoiding the problems such as service abnormity and device fault caused by the wrong plug.

One embodiment at least includes the step 201 to the step 204 of the embodiment shown in FIG. 2 or the step 301 to the step 307 of the embodiment shown in FIG. 3. Unlike those embodiments, the embodiment has the following additional steps: when the management module detects that the installation information is not matched with the installation configuration file information, besides sending the power-on inhibition instruction to the BMC, the management module also records the detection result in a running log and sends an alarm to an upper-layer network management system through a standard protocol (for example, a simple network management protocol (SNMP)).

Another embodiment at least includes the step 201 to the step 204 of the embodiment shown in FIG. 2 or the step 301 to the step 307 of the embodiment shown in FIG. 3. Unlike those embodiments, the embodiment has the following additional steps: the management module may provide a standard interface to obtain update information (for example, an update instruction carrying a new installation configuration file) of a local installation configuration file from the upper-layer network management system, and update the local installation configuration file with the new installation configuration file according to the update information.

The preceding embodiments may further include that the electronic tag information of the blade server may be modified through a third party interface or maintenance tools.

Another embodiment of the present invention easily detects whether the mixed plugging of the blade server occurs according to the installation configuration file information by detecting the compatibility of modules (the front plugboard and the rear plugboard) of the blade server or the compatibility between the blade server and other modules (the FRU and the machine frame device), thereby avoiding the problems such as service abnormity and device fault caused by the wrong plug. It is convenient for engineers to rapidly find the misplug and the mixed plugging of the blade server and rapidly perform fault diagnosis and troubleshooting through an indicator light alarm or an alarm sent to the upper-layer network management system when the actual configuration information is not matched with the installation configuration file, so as to improve the serviceability of the blade server. The installation configuration file is updated through the update information of the local installation configuration file of the management module from the upper-layer network management system, so as to meet the customization requirements at a device configuration field. The electronic tag information of the blade server can be modified through the third party interface or the maintenance tools. The management module reports the obtained actual configuration information to the upper-layer network management system so that the upper-layer network management system can detect whether the installation information is matched with the configuration file information according to the local configuration file and automatically connect or disconnect the blade server, thereby enhancing the management capability of the upper-layer network management system to the blade server. The management module reports the electronic tag information and the installation configuration file to the upper-layer network management system so that the upper-layer network management system can identify the hardware type or the service software type of the blade server, and perform other third party integrated expansion functions such as asset management to improve customer equipment maintenance efficiency and lower equipment running cost. The customization of multiple service action boards, normalization and generalization of the blade servers can be realized according to the installation configuration file, the electronic tag information and flexible combinations of the blade server and FRU modules, thereby increasing the productivity and lowering the production cost. In addition, the present invention can further realize precision customization based on a service solution hardware platform of the blade server, and can realize hardware quotation customization in coordination with a business strategy to improve the flexibility of market allocation.

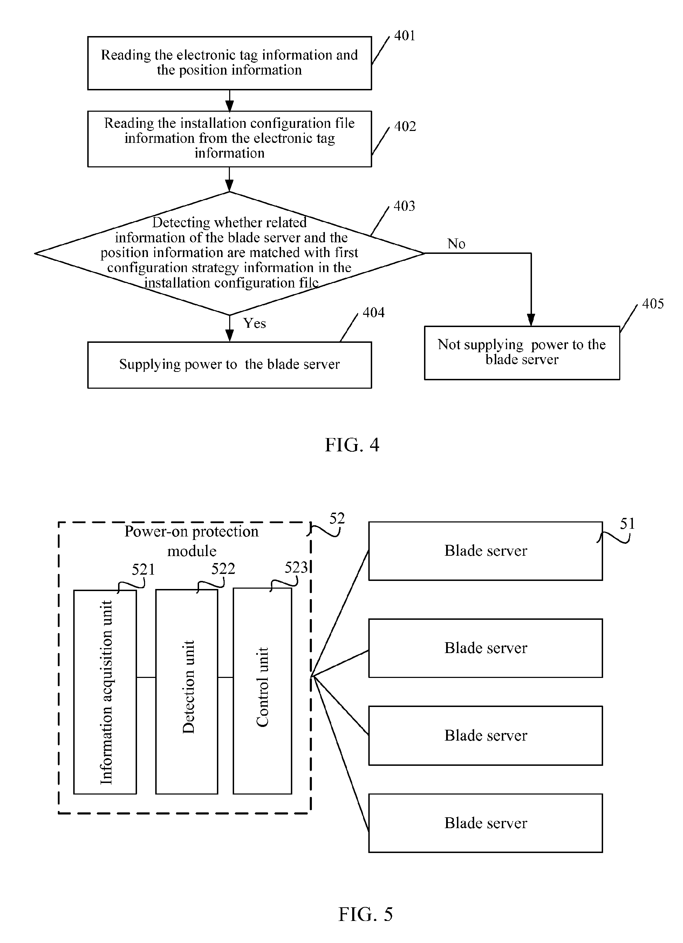

FIG. 4 is a schematic diagram of a third embodiment of the power-on protection method of the present invention. Referring to FIG. 4, another embodiment of the power-on protection method is shown. In the method, the installation configuration file is stored in an electronic tag of the blade server; therefore, the electronic tag includes the installation configuration file and related information of the blade server in addition to the installation configuration file information. In the embodiment, the related information of the blade server includes information such as a blade server name, a blade server type, a manufacturer, a serial number, or the like. The installation configuration file includes first configuration strategy information which instructs to set a specified blade server at a specified position in the blade frame. Referring to the figure 4, the method mainly includes:

Step 401: A BMC initializes power-on, and reads electronic tag information of a blade server inserted in a slot of a blade frame and position information of the blade server in the blade frame.

Step 402: The BMC reads installation configuration file information from the electronic tag information.

Step 403: The BMC detects whether the related information of the blade server in addition to the installation configuration file in the electronic tag and the position information are matched with the first configuration strategy information in the installation configuration file. That is, judging whether the blade server is set at a position indicated by the first configuration strategy information according to the related information of the blade server in addition to the installation configuration file in the electronic tag, the position information (the two former items are the installation information of the blade server), and the first configuration strategy information; if the blade server is set at the position indicated by the first configuration strategy information, it is determined that the related information of the blade server in addition to the installation configuration file in the electronic tag and the position information are matched with the first configuration strategy information in the installation configuration file, and step 404 is executed; otherwise, the related information of the blade server in addition to the installation configuration file in the electronic tag and the position information are not matched with the first configuration strategy information in the installation configuration file, and step 405 is executed.

Step 404: The BMC supplies power to the blade server.

Step 405: The BMC dose not supply power to the blade server.

In the embodiment of the protection method shown in FIG. 4, the BMC obtains the installation information of the blade server in the blade frame and the installation configuration file information in the electronic tag through the step 401 and the step 402; and the BMC detects whether the installation information is matched with the installation configuration file information through the step 403, if the installation information is matched with the installation configuration file information, the BMC keeps supplying power to the blade server through the step 404; otherwise, the BMC performs power-off or reset action on the blade server through the step 405; thus, it is easy to detect whether the misplug of the blade server occurs according to the installation configuration file information, thereby avoiding the problems such as service abnormity and device fault caused by the wrong plug.

It should be noted that the power-on protection method of the embodiment of the present invention realizes a soft functional lock for power-on protection of a blade server through the step 202, the step 304 or the step 403, which can prevent connection conflicts of the misplugged or mixed plugged blade servers after power-on, for example, power supply conflict of the misplugged or mixed plugged high-power blade servers with other blade servers under running during the power-on, and can also prevent service conflicts of the misplugged or the mixed plugged blade servers after the power-on, for example, multiple misplugged or mixed plugged blade servers with dynamic host configuration protocol (DHCP) functions results in the DHCP service abnormity in a service network when being connected by powering on.

Accordingly, the following paragraphs illustrate the power-on protection system and the power-on protection module of the embodiment of the present invention.

FIG. 5 is a schematic diagram of a first embodiment of the power-on protection system of the present invention. Referring to FIG. 5, the system mainly includes a blade server 51 inserted in a slot of a blade frame and a power-on protection module 52, in the system:

The power-on protection module 52 is adapted to obtain installation information of the blade server 51 in a blade frame and installation configuration file information about setting the blade server in the blade frame; detect whether the installation information is matched with the installation configuration file information; and control to supply power to the blade server 51 if the installation information is matched with the installation configuration file information; otherwise, controls not to supply power to the blade server 51. Specifically, the power-on protection module 52 may include an information acquisition unit 521, a detection unit 522 and a control unit 523, in the module:

The information acquisition unit 521 is adapted to obtain the installation information of the blade server 51 in the blade frame and the installation configuration file information about setting the blade server in the blade frame. The installation configuration file describes the information about how to set the blade server in the blade frame, and the installation configuration file information may include, but is not limited to, one or more of the preceding configuration strategy information (for example, the first configuration strategy information, the second configuration strategy information, the third configuration strategy information and the fourth configuration strategy information), which will not be repeated herein. Accordingly, with regard to the first configuration strategy information, the second configuration strategy information, the third configuration strategy information and the fourth configuration strategy information, the installation information of the blade server 51 in the blade frame may include, but is not limited to the multiple circumstances mentioned above, which will also not repeated herein.

The detection unit 522 is adapted to detect whether the installation information is matched with the installation configuration file information; and

The control unit 523 is adapted to control to supply power to the blade server 51 when the detection unit 522 detects that the installation information is matched with the installation configuration file information; and control not to supply power to the blade server 51 when the detection unit 522 detects that the installation information is not matched with the installation configuration file information.

Specifically, as the installation configuration file may include one or more of the above configuration strategy information, detection may focus on one type of the configuration strategy information or on multiple types of the configuration strategy information at the same time, and the detection unit 522 may optionally include the following structures:

When the installation information includes the electronic tag information of the blade server inserted in a slot of the blade frame and the position information of the blade server 51 in the blade frame, and the installation configuration file information includes the first configuration strategy information, the detection unit 522 includes a first reading unit and a first judging unit, in which:

The first reading unit is adapted to read the electronic tag information, the position information and the first configuration strategy information; and

The first judging unit is adapted to judge whether the blade server 51 is set at a position indicated by the first configuration strategy information according to the electronic tag information, the position information and the first configuration strategy information which are read by the first reading unit; if the blade server is set at the position indicated by the first configuration strategy information, it is determined that the installation information is matched with the installation configuration file information; otherwise, it is determined that the installation information is not matched with the installation configuration file information.

When the installation information includes the electronic tag information of the blade server 51 inserted in a slot of the blade frame, and the electronic tag information includes the front plugboard electronic tag information and the rear plugboard electronic tag information, and the installation configuration file information includes the second configuration strategy information; the detection unit 522 includes a second reading unit and a second judging unit, in which:

The second reading unit is adapted to read the front plugboard electronic tag information, the rear plugboard electronic tag information and the second configuration strategy information; and

The second judging unit is adapted to judge whether a front plugboard and a rear plugboard of the blade server 51 have a matching relation indicated by the second configuration strategy information according to the front plugboard electronic tag information, the rear plugboard electronic tag information and the second configuration strategy information which are read by the second reading unit; if the front plugboard and the rear plugboard have the matching relation, it is determined that the installation information is matched with the installation configuration file information; otherwise, it is determined that the installation information is not matched with the installation configuration file information.

When the installation information includes the electronic tag information of the blade server 51 inserted in a slot of the blade frame and FRU information of the blade server 51, and the installation configuration file information includes the third configuration strategy information; the detection unit 522 includes a third reading unit and a third judging unit, in which:

The third reading unit reads the electronic tag information, the FRU information of the blade server 51 and the third configuration strategy information; and

The third judging unit judges whether the blade server 51 and the FRU of the blade server 51 have a version matching relation indicated by the third configuration strategy information according to the electronic tag information, the FRU information of the blade server 51 and the third configuration strategy information which are read by the third reading unit; if the blade server and the FRU of the blade server 51 have the version matching relation, it is determined that the installation information is matched with the installation configuration file information; otherwise, the installation information is not matched with the installation configuration file information.

When the installation information includes the electronic tag information of the blade server 51 inserted in a slot of the blade frame and information of a machine frame device in the blade frame, and the installation configuration file information includes the fourth configuration strategy information; the detection unit 522 includes a fourth reading unit and a fourth judging unit, in which:

The fourth reading unit reads the electronic tag information, the information of the machine frame device in the blade frame and the fourth configuration strategy information; and

The fourth judging unit judges whether the blade server 51 and the machine frame device in the blade frame have a version matching relation indicated by the fourth configuration strategy information according to the electronic tag information, the information of the machine frame device in the blade frame and the fourth configuration strategy information which are read by the fourth reading unit; if the blade server and the machine frame device have the version matching relation, it is determined that the installation information is matched with the installation configuration file information; otherwise, it is determined that the installation information is not matched with the installation configuration file information.

In the first embodiment of the power-on protection system of the present invention shown in FIG. 5, the information acquisition unit 521 obtains the installation information of the blade server 51 in the blade frame and the installation configuration file information about setting the blade server in the blade frame; the detection unit 522 detects whether the installation information is matched with the installation configuration file information; and the control unit 523 controls whether to supply power to the blade server 51 or not according to the detection result from the detection unit 522; thus, it is easy to detect whether the misplug and the mixed plugging of the blade server 51 occur according to the installation configuration file information, thereby avoiding the problems such as service abnormity and device fault caused by the wrong plug.

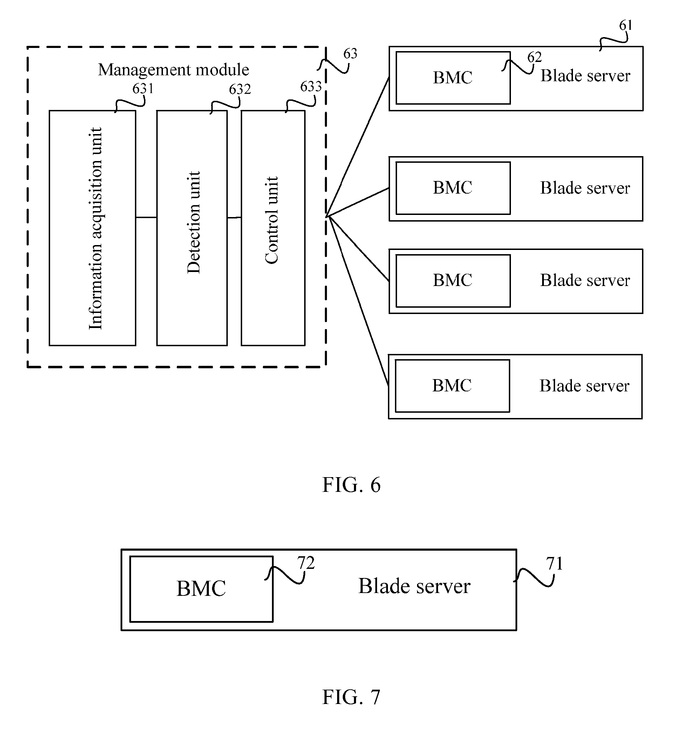

FIG. 6 is a schematic diagram of a second embodiment of the power-on protection system of the present invention. The system includes a blade server 61, a BMC 62 and a management module 63, and the management module 63 may include an information acquisition unit 631, a detection unit 632 and a control unit 633, in the system:

The BMC 62 is adapted to perform power-on initialization, read the electronic tag information of the blade server 61 inserted in a slot of the blade frame and the position information of the blade server 61 in the blade frame, when the blade server 61 is not supplied with power; and the BMC 62 reports the electronic tag information and the position information to the management module 63 to request power-on for the blade server 61.

The information acquisition unit 631 in the management module 63 is adapted to receive the electronic tag information and the position information (i.e., the installation information of the blade server 61 in the blade frame), and obtains a local installation configuration file about setting the blade server in the blade frame. The installation configuration file includes the first configuration strategy information which instructs to set a specified blade server at a specified position in the blade frame, for example, the first configuration strategy information is a list of slots in the blade frame corresponding to blade server types.

The detection unit 632 in the management module 63 is adapted to detect whether the electronic tag information and the position information are matched with the first configuration strategy information in the installation configuration file. Specifically, the detection unit 632 may include a first reading unit and a first judging unit, in which:

The first reading unit is adapted to read the electronic tag information, the position information and the first configuration strategy information; and

The first judging unit is adapted to judge whether the blade server 61 is set at a position indicated by the first configuration strategy information according to the electronic tag information, the position information and the first configuration strategy information which are read by the first reading unit; if the blade server is set at the reference position, it is determined that the electronic tag information and the position information are matched with the installation configuration file information; otherwise, the electronic tag information and the position information are not matched with the installation configuration file information.

The control unit 633 in the management module 63 is adapted to send a power-on approval instruction to the BMC 62 when the detection unit 632 detects that the electronic tag information and the position information are matched with the installation configuration file information; and sends a power-on inhibition instruction to the BMC 62 when the detection unit 632 detects that the electronic tag information and the position information are not matched with the installation configuration file information;

The BMC 62 is adapted to power on the blade server 61 according to the power-on approval instruction, or doesn't supply power to the blade server 61 according to the power-on inhibition instruction.

As an embodiment, the management module 63 may further include an alarm unit adapted to control the BMC 62 to perform an indicator light alarm for performing the state prompt on the blade server 61 with no power-on when the detection unit 632 in the management module 63 detects that the electronic tag information and the position information are not matched with the installation configuration file information.

As an embodiment, when the local installation configuration file of the management module 63 includes the second configuration strategy information which instructs to set a matching relation between the front plugboard electronic tag information and the rear plugboard electronic tag information of the blade server in the blade frame, then the management module 63 reads the front plugboard electronic tag information and the rear plugboard electronic tag information (i.e., the actual configuration information) of the blade server 61 during the BMC 62 initializing power-on, and reports the front plugboard electronic tag information and the rear plugboard electronic tag information to the management module 63. The management 63 may further include a second reading unit and a second judging unit, in which:

The second reading unit is adapted to read the front plugboard electronic tag information, the rear plugboard electronic tag information and the second configuration strategy information; and

The second judging unit is adapted to judge whether a front plugboard and a rear plugboard of the blade server have a matching relation indicated by the second configuration strategy information according to the front plugboard electronic tag information, the rear plugboard electronic tag information and the second configuration strategic information which are read by the second reading unit; if the front plugboard and the rear plugboard of the blade server have the matching relation, it is determined that the installation information is matched with the installation configuration file information, and at the moment, the control unit 633 in the management module 63 sends a power-on approval instruction to the BMC 62; otherwise, it is determined that the installation information is not matched with the installation configuration file information, and the control unit 633 in the management module 63 sends a power-on inhibition instruction to the BMC 62.

As an embodiment, when the local installation configuration file of the management module 63 includes the third configuration strategy information which instructs to set the blade server 61 that has a version matching relation with an FRU of the blade server in the blade frame; the BMC 62 can read the electronic tag information of the blade server 61, the FRU information of the blade server 61 (i.e., the actual configuration information), and reports the electronic tag information of the blade server 61 and the FRU information of the blade server 61 to the management module. The management module 63 can further include a third reading unit and a third judging unit, in which:

The third reading unit is adapted to read the electronic tag information of the blade server 61, the FRU information of the blade server 61 and the third configuration strategy information; and

The third judging unit is adapted to judge whether the blade server 61 and the FRU of the blade server 61 have a version matching relation indicated by the third configuration strategy information according to the electronic tag information of the blade server 61, the FRU information of the blade server 61 and the third configuration strategy information which are read by the third reading unit; if the blade server 61 and the FRU of the blade server 61 have the version matching relation, it is determined that the installation information is matched with the installation configuration file information, and the control unit 633 in the management module 63 sends a power-on approval instruction to the BMC 62; otherwise, it is determined that the installation information is not matched with the installation configuration file information, and the control unit 633 in the management module 63 sends a power-on inhibition instruction to the BMC 62.

As an embodiment, when the local installation configuration file of the management module 63 includes the fourth configuration strategy information which instructs to set the blade server that has a version matching relation with a machine frame device in the blade frame, then the BMC 62 can read the electronic tag information of the blade server 61, the information of the machine frame device in the blade frame (i.e., the actual configuration information), and report the electronic tag information of the blade server 61 and the information of the machine frame device in the blade frame to the management module 63. The management module 63 may be the following structure including a fourth reading unit and a fourth judging unit:

The fourth reading unit is adapted to read the electronic tag information of the blade server 61, the information of the machine frame device in the blade frame and the fourth configuration strategy information; and

The fourth judging unit is adapted to judge whether the blade server 61 and the machine frame device in the blade frame have a version matching relation indicated by the fourth configuration strategy information according to the electronic tag information of the blade server 61, the information of the machine frame device in the blade frame and the fourth configuration strategy information which are read by the fourth reading unit; if the blade server 61 and the machine frame device have the version matching relation, it is determined that the installation information is matched with the installation configuration file information, and the control unit 633 in the management module 63 sends a power-on approval instruction to the BMC 62; otherwise, it is determined that the installation information is not matched with the installation configuration file information, and the control unit 633 in the management module 63 sends a power-on inhibition instruction to the BMC 62.

As an embodiment, the management module 63 may further include another alarm unit adapted to send an alarm to an upper-layer network management system through a standard protocol (for example, an SNMP) when the detection unit 632 in the management module 63 detects that the installation information is not matched with the installation configuration file information.

As an embodiment, the management module 63 may further include an installation configuration file information unit which stores an installation configuration file, obtains update information of the stored installation configuration file from an upper-layer network management system through a standard interface, and updates the stored installation configuration file with a new installation configuration file according to the update information.

In the second embodiment of the power-on protection system of the present invention shown in FIG. 6, the information acquisition unit 631 in the management module 63 obtains the installation information of the blade server 61 in the blade frame reported by the BMC 62 and the local installation configuration file information (for example, the installation configuration file information stored in the installation configuration file information unit of the management module 63) about setting the blade server in the blade frame; the detection unit 632 in the management module 63 detects whether the installation information is matched with the installation configuration file information; and the control unit 633 in the management module 63 sends a power-on approval instruction to the BMC 62 or sends a power-on inhibition instruction on the blade server to the BMC 62 according to the detection result from the detection unit 632; thus, it is easy to detect whether the misplug of the blade server occurs according to the installation configuration file information, thereby avoiding the problems such as service abnormity and device fault caused by the wrong plug.

Another embodiment of the present invention can easily detect whether the mixed plugging of the blade server 61 occurs according to the installation configuration file information by detecting the compatibility of self modules (the front plugboard and the rear plugboard) of the blade server 61 or the compatibility between the blade server 61 and other modules (the FRU and the machine frame device), thereby avoiding the problems such as service abnormity and device fault caused by the wrong plug. It is convenient for technical service engineers to rapidly find the misplug and the mixed plugging of the blade server 61, and rapidly perform fault diagnosis and troubleshooting through the alarm unit in the management module 63, thus improving the serviceability of the blade server.

FIG. 7 is a schematic diagram of a third embodiment of the power-on protection system of the present invention. In addition, the third embodiment of the power-on protection system as shown in FIG. 7 includes a blade server 71 and a BMC 72. The BMC 72 includes an information acquisition unit, a detection unit and a control unit; an installation configuration file is stored in an electronic tag of the blade server 71; therefore, the electronic tag includes the installation configuration file and related information of the blade server 71 in addition to the installation configuration file information, such as blade server 71 name, blade server 71 type, manufacturer, serial number, or the like, and the installation configuration file includes first configuration strategy information which instructs to set a specified blade server at a specified position in the blade frame, in which:

The information acquisition unit in the BMC 72 is adapted to read the electronic tag information of the blade server 71 inserted in a slot of the blade frame and the position information of the blade server 71 in the blade frame after the power-on initialization, at the moment, the blade server has been supplied with power, and the installation configuration file information is read from the electronic tag information.

The detection unit in the BMC 72 is adapted to detect whether the related information of the blade server 71 in addition to the installation configuration file in the electronic tag and the position information are matched with the first configuration strategy information in the installation configuration file, that is, the detection unit judges whether the blade server 71 is set at a position indicated by the first configuration strategy information according to the related information of the blade server 71 in addition to the installation configuration file in the electronic tag and the position information (the two former items are the installation information of the blade server 71) as well as the first configuration strategy information; if the blade server 71 is set at the position indicated by the first configuration strategy information, it is determined that the related information of the blade server 71 in addition to the installation configuration file in the electronic tag and the position information are matched with the first configuration strategy information in the installation configuration file; otherwise, the related information of the blade server 71 in addition to the installation configuration file in the electronic tag and the position information are not matched with the first configuration strategy information in the installation configuration file.

The control unit in the BMC 72 is adapted to control to keep supplying power to the blade server 71 when the detection unit detects that the related information of the blade server 71 in addition to the installation configuration file in the electronic tag and the position information are matched with the first configuration strategy information in the installation configuration file; and control to perform power-off or reset action on the blade server 71, that is, controls not to supply power to the blade server 71 when the detection unit detects that the related information of the blade server 71 in addition to the installation configuration file in the electronic tag and the position information are not matched with the first configuration strategy information in the installation configuration file.

In the third embodiment of the power-on protection system of the present invention shown in FIG. 7, the information acquisition unit in the BMC 72 obtains the installation information of the blade server 71 in the blade frame and the installation configuration file information in the electronic tag; the detection unit in the BMC 72 detects whether the installation information is matched with the installation configuration file information; and the control unit in the BMC 72 controls to supply power to the blade server 71 or controls to perform power-off or reset action on the blade server 71 according to the detection result from the detection unit; thus, it is easy to detect whether the misplug of the blade server occurs according to the installation configuration file information, thereby avoiding the problems such as service abnormity and device fault caused by the wrong plug.

In addition, it can be understood by people skilled in the art that the realization of all or part of procedures in the methods of the embodiments can be completed through related hardware instructed by a program, the program may be stored in a computer readable storage media and can include the processes as described in the preceding embodiments of methods when executing. The storage media can be a disk, an optical disk, a read-only memory (ROM) or a random access memory (RAM), etc.

The preceding descriptions are the preferred embodiments of the present invention, and it should be understood by people skilled in the art that improvements and modifications can be made therein without departing from the principle of the present invention and can be incorporated in the protection scope of the present invention.

## Claims

1. A power-on protection method, comprising:
obtaining installation information and installation configuration file information of a blade server in a blade frame, wherein the installation configuration file information is configuration strategy information about setting the blade server in the blade frame; and
detecting whether the installation information is matched with the installation configuration file information and supplying power to the blade server if the installation information is matched with the installation configuration file information, otherwise, not supplying power to the blade server.

2. The method according to claim 1, wherein,
when the installation information comprises electronic tag information of the blade server and position information of the blade server in the blade frame, and the installation configuration file information comprises first configuration strategy information about setting a specified blade server at a specified position in the blade frame, the detecting whether the installation information is matched with the installation configuration file information comprises:
judging whether the blade server is set at a position indicated by the first configuration strategy information according to the electronic tag information, the position information and the first configuration strategy information, and determining that the installation information is matched with the installation configuration file information if the blade server is set at the position, otherwise, determining that the installation information is not matched with the installation configuration file information.

3. The method according to claim 1, wherein,
when the installation information comprises front plugboard electronic tag information and rear plugboard electronic tag information, and the installation configuration file information comprises second configuration strategy information about setting a matching relation between the front plugboard electronic tag information and the rear plugboard electronic tag information of the blade server in the blade frame, the detecting whether the installation information is matched with the installation configuration file information comprises:
judging whether a front plugboard and a rear plugboard of the blade server have the matching relation indicated by the second configuration strategy information according to the front plugboard electronic tag information, the rear plugboard electronic tag information and the second configuration strategy information, and determining that the installation information is matched with the installation configuration file information if the front plugboard and the rear plugboard have the matching relation, otherwise, determining that the installation information is not matched with the installation configuration file information.

4. The method according to claim 1, wherein
when the installation information comprises electronic tag information of the blade server and information of a field replace unit (FRU) of the blade server, and the installation configuration file information comprises third configuration strategy information about setting a blade server having a version matching relation with the FRU of the blade server in the blade frame, the detecting whether the installation information is matched with the installation configuration file information comprises:
judging whether the blade server and the FRU of the blade server have the version matching relation indicated by the third configuration strategy information according to the electronic tag information, the information of the FRU of the blade server and the third configuration strategy information, and determining that the installation information is matched with the installation configuration file information if the blade server and the FRU have the version matching relation, otherwise, determining that the installation information is not matched with the installation configuration file information.

5. The method according to claim 1, wherein,
when the installation information comprises the electronic tag information of the blade server and information of a machine frame device in the blade frame, and the installation configuration file information comprises fourth configuration strategy information about setting a blade server having a version matching relation with a machine frame device in the blade frame, the detecting whether the installation information is matched with the installation configuration file information specifically comprises:
judging whether the blade server and the machine frame device in the blade frame have the version matching relation indicated by the fourth configuration strategy information according to the electronic tag information, the information of the machine frame device in the blade frame and the fourth configuration strategy information, and determining that the installation information is matched with the installation configuration file information if the blade server and the machine frame device have the version matching relation, otherwise, determining that the installation information is not matched with the installation configuration file information.

6. The method according to any one of claims 1 to 5, wherein the installation configuration file information is stored in a machine frame management module, and the machine frame management module obtains the installation information of the blade server in the blade frame according to a power-on request message sent by a baseboard management controller; or
the installation configuration file information is stored in the electronic tag information of the blade server, and the baseboard management controller obtains the installation information of the blade server in the blade frame according to the electronic tag information stored in the blade server.

7. The method according to any one of claims 1 to 5, wherein the method further comprises:
sending an alarm to an upper-layer network management system and/or performing an indicator light alarm, when detecting that the installation information is not matched with the installation configuration file information.

8. A power-on protection module, comprising:
an information acquisition unit, adapted to obtain installation information and installation configuration file information of a blade server in a blade frame, wherein the installation configuration file information is configuration strategy information about setting the blade server in the blade frame;
a detection unit, adapted to detect whether the installation information is matched with the installation configuration file information; and
a control unit, adapted to control to supply power to the blade server if the detection unit detects that the installation information is matched with the installation configuration file information, otherwise, to control not to supply power to the blade server.

9. The module according to claim 8, wherein,
when the installation information comprises electronic tag information of the blade server and position information of the blade server in the blade frame, and the installation configuration file information comprises first configuration strategy information about setting a specified blade server at a specified position in the blade frame, the detection unit comprises:
a first reading unit, adapted to read the electronic tag information, the position information and the first configuration strategy information; and
a first judging unit, adapted to judge whether the blade server is set at a position indicated by the first configuration strategy information according to the electronic tag information, the position information and the first configuration strategy information, and determining that the installation information is matched with the installation configuration file information if the blade server is set at the reference position, otherwise, determining that the installation information is not matched with the installation configuration file information.

10. The module according to claim 8, wherein,
when the installation information comprises the electronic tag information of the blade server, the electronic tag information comprises front plugboard electronic tag information and rear plugboard electronic tag information, and the installation configuration file information comprises second configuration strategy information about setting a matching relation between the front plugboard electronic tag information and the rear plugboard electronic tag information of the blade server in the blade frame, the detection unit comprises:
a second reading unit, adapted to read the front plugboard electronic tag information, the rear plugboard electronic tag information and the second configuration strategy information; and
a second judging unit, adapted to judge whether a front plugboard and a rear plugboard of the blade server have the matching relation indicated by the second configuration strategy information according to the front plugboard electronic tag information, the rear plugboard electronic tag information and the second configuration strategy information, and determining that the installation information is matched with the installation configuration file information if the front plugboard and the rear plugboard have the matching relation, otherwise, determining that the installation information is not matched with the installation configuration file information.

11. The module according to claim 8, wherein
when the installation information comprises the electronic tag information of the blade server and information of a field replace unit (FRU) of the blade server, and the installation configuration file information comprises third configuration strategy information about setting a blade server having a version matching relation with the FRU of the blade server in the blade frame, the detection unit comprises:
a third reading unit, adapted to read the electronic tag information and the third configuration strategy information; and
a third judging unit, adapted to judge whether the blade server and the FRU of the blade server have the version matching relation indicated by the third configuration strategy information according to the electronic tag information, the information of the FRU of the blade server and the third configuration strategy information, and determining that the installation information is matched with the installation configuration file information if the blade server and the FRU have the version matching relation, otherwise, determining that the installation information is not matched with the installation configuration file information.

12. The module according to claim 8, wherein
when the installation information comprises the electronic tag information of the blade server and information of a machine frame device in the blade frame, and the installation configuration file information comprises fourth configuration strategy information about setting a blade server having a version matching relation with a machine frame device in the blade frame, the detection unit comprises:
a fourth reading unit, adapted to read the electronic tag information and the fourth configuration strategy information; and
a fourth judging unit, adapted to judge whether the blade server and the machine frame device in the blade frame have the version matching relation indicated by the fourth configuration strategy information according to the electronic tag information, the information of the machine frame device in the blade frame and the fourth configuration strategy information, and determining that the installation information is matched with the installation configuration file information if the blade server and the machine frame device have the version matching relation, otherwise, determining that the installation information is not matched with the installation configuration file information.

13. The module according to any one of claims 8 to 12, wherein the module further comprises:
an alarm unit, adapted to send an alarm to an upper-layer network management system and/or control to perform an indicator light alarm when the detection unit detects that the installation information is not matched with the installation configuration file information.

14. The module according to any one of claims 8 to 12, wherein the module further comprises:
an installation configuration file information unit, adapted to store the installation configuration file information, obtain update information of the installation configuration file information from an upper-layer network management system and control to update the installation configuration file information according to the update information.

15. A power-on protection system, comprising a blade server and a power-on protection module, wherein
the power-on protection module is adapted to obtain installation information and installation configuration file information of the blade server in a blade frame, wherein the installation configuration file information is configuration strategy information about setting the blade server in the blade frame; detect whether the installation information is matched with the installation configuration file information; and control to supply power to the blade server if the installation information is matched with the installation configuration file information, otherwise, control not to supply power to the blade server.
